# EUROPEAN PATENT SPECIFICATION

(11) **EP 2 843 379 B1**
(45) Date of publication and mention of the grant of the patent: **03.07.2019**
(21) Application number: 13780749.1
(22) Date of filing: 21.01.2013
(51) Int. Cl.: G01G 21/28, B65B 37/18, B65D 88/26, G01G 13/00

(54) **SCALE DEVICE**
WÄGEEINRICHTUNG
DISPOSITIF BASCULE

(30) Priority: 23.04.2012 JP 2012097952
(43) Date of publication of application: 04.03.2015
(73) Proprietor: Yamato Scale Co., Ltd., Akashi-shi, Hyogo 673-0849 (JP)
(72) Inventor: TSURUOKA, Masatomi, Hyogo 673-0849 (JP); KISHIMOTO, Hirotsugu, Hyogo 673-0849 (JP)
(74) Representative: Whitlock, Holly Elizabeth Ann
(86) International application number: PCT/JP2013/000255
(87) International publication number: WO 2013/161137

(56) References cited:
- JP-A- 2001 272 267
- JP-A- 2001 278 434
- JP-A- 2001 278 453
- JP-A- 2009 029 497
- JP-A- 2009 029 497
- JP-A- 2009 029 497
- JP-A- 2009 067 436
- JP-A- 2011 031 963
- JP-U- S56 172 593

## Description

### Technical Field

The present invention relates to a weighing apparatus which weighs objects such as powdered products (detergent, fertilizer, etc.), or granular products (resin pellets, cereal, feeding stuff, etc.) and supplies the weighed objects to bags, or the like.

### Background Art

As a conventional apparatus which charges objects comprising powdered products or granular products to containers such as bags, there is a weighing apparatus called a packer scale.

In such a weighing apparatus, a weighing hopper (scale hopper) supported by a load cell is supplied with the objects from above and weighs the objects. A supply device placed above the weighing hopper discharges the objects to supply the objects to the weighing hopper. The objects discharged from the supply device are dropped by their own weight and supplied to the weighing hopper. After the supply device discharges the objects to the weighing hopper, a control unit of the weighing apparatus calculates the weight of the objects held inside the weighing hopper based on a signal output from the load cell, after a passage of a predetermined time. This predetermined time is a time (i.e., weighing stabilization time) required to stabilize the signal output from the load cell after the objects are supplied.

In the above described weighing apparatus, it is important to prevent ingress of foreign matters from a bearing or a link unit of the weighing hopper into the objects. For this purpose, Patent Literature 1 discloses a structure for isolating the bearing or the like of the weighing hopper from a space in which a hopper body of the weighing hopper is placed.

### Citation List

### Patent Literature

Patent Literature 1: Japanese Laid-Open Patent Application Publication No. 2009-29497

### Summary of Invention

### Technical Problem

However, even in the apparatus disclosed in Patent Literature 1, the ingress of the foreign matters into the objects cannot be prevented appropriately and adequately. For example, in some cases, if fastening members (e.g., bolt, nut, or the like) for fastening a discharge gate and a gate rotary shaft to each other get loose due to a vibration of the actuated weighing hopper, the bolt, the nut, or the like are dropped into the hopper body of the weighing hopper and the ingress of the bolt, the nut, or the like, into the objects occurs. Or, in other cases, in a maintenance/inspection work of the weighing apparatus, support member (e.g., bolt, nut, or the like) used for supporting the weighing hopper is dropped into the hopper body of the weighing hopper by mistake, and the ingress of the support member into the objects occurs.

In other words, the apparatus disclosed in Patent Literature 1 has a room for improvement in achievement of the weighing apparatus having a contamination-free structure which is capable of preventing the ingress of the foreign matters into the objects appropriately and adequately.

Japanese Utility Model Application Publication No. Sho. 62-155026 discloses a structure including a rib which is a nut disengagement preventing means. This Publication relates to a technique of a back door device for a vehicle. It is difficult to directly apply this structure to a design of the contamination-free structure of the weighing apparatus.

The present invention has been developed under the above stated circumstances, and an object of the present invention is to provide a weighing apparatus having a contamination-free structure which is capable of preventing ingress of foreign matters into objects appropriately and adequately.

### Solution to Problem

To achieve the above object, according to claim 1 there is provided a weighing apparatus comprising: a weighing hopper which holds for a specified time objects dropped from above to the weighing hopper and discharges the objects downward; and a partition wall which partitions a region in which the weighing hopper is placed into a center region including a region through which the objects are dropped and outer regions located at both sides of the center region, when viewed from above; wherein the weighing hopper includes: a tubular hopper body; a gate which is used as a bottom lid of the hopper body and is capable opening and closing a discharge outlet through which the objects are discharged from the hopper body; an opening and closing means which is placed on a side surface of the hopper body which is parallel to a plane including opening and closing directions of the gate and generates a force for opening and closing the gate; a rotary shaft which is unitarily fastened to the gate and penetrates the partition wall in a non-contact state to be connected to the opening and closing means; and first and second bearing units which are provided at one end side and the other end side of the rotary shaft, respectively, to support the rotary shaft such that the rotary shaft is rotatable; wherein the hopper body, the gate, and a fastening means which unitarily fastens the gate to the rotary shaft, are placed in the center region; and wherein the opening and closing means, and the first and second bearing units are placed in the outer regions.

In accordance with this configuration, it becomes possible to prevent ingress of foreign matters into the objects appropriately and adequately. For example, the gate and the rotary shaft are unitarily fastened to each other. Therefore, it becomes possible to prevent ingress of components used for fastening the gate and the rotary shaft to each other, into the objects. In addition, it becomes possible to prevent a situation in which the foreign matters from the opening and closing means and the bearing units are dropped into the hopper body of the weighing hopper by mistake and ingress of the foreign matters into the objects occurs.

In a weighing apparatus according to another aspect of the present invention, the fastening means may include a pair of fastening metal members which sandwich the rotary shaft in a direction perpendicular to an axial direction of the rotary shaft, and thereby move according to a rotation of the rotary shaft, and a fastening member which fastens the fastening metal members to each other in the direction perpendicular to the axial direction of the rotary shaft; and wherein the gate may be unitarily fastened to one of the fastening metal members, and the fastening member is unitarily fastened to the other of the fastening metal members.

In accordance with this configuration, for example, it becomes possible to avoid a situation in which the fastening member gets loose due to a vibration of the actuated weighing hopper. Therefore, it becomes possible to prevent a situation in which the fastening member is dropped into the hopper body of the weighing hopper and ingress of the fastening member into the objects occurs. In addition, in a maintenance/inspection work of the weighing apparatus, it becomes possible prevent a situation in which the fastening member is dropped into the hopper body of the weighing hopper by mistake and ingress of the fastening member into the objects occurs.

In a weighing apparatus according to another aspect of the present invention, each of the first and second bearing units may include a bearing section supporting the rotary shaft such that the rotary shaft is rotatable and a flange section around the bearing section; wherein in a state in which the flange section is coupled to a mounting member of the hopper body, the rotary shaft may penetrate the mounting member in a non-contact state; and wherein in a state in which the flange section is not coupled to the mounting member, the rotary shaft may be detachable from the mounting member in a direction perpendicular to an axial direction of the rotary shaft.

In a weighing apparatus according to another aspect of the present invention, the rotary shaft may be detached from the mounting member via a hole of the mounting member, the hole being formed by cutting.

In accordance with this configuration, for example, in the maintenance/ inspection work of the weighing apparatus, the rotary shaft can be easily detached. Since the gate and the rotary shaft are unitarily fastened to each other as described above, the gate can also be easily detached, in the maintenance/inspection work.

The above and further objects, features and advantages of the invention will more fully be apparent from the following detailed description of a preferred embodiment, with reference to accompanying drawings.

### Advantageous Effects of Invention

The present invention has advantages that it is possible to provide a weighing apparatus having a contamination-free structure which is capable of preventing the ingress of the foreign matters into the objects appropriately and adequately.

### Brief Description of Drawings

Fig. 1 is a front view of an exemplary weighing apparatus according to an embodiment of the present invention.
Fig. 2 is a plan view of the weighing apparatus (taken in the direction of arrows along II-II of Fig. 1).
Fig. 3 is a block diagram showing an exemplary control system in the weighing
   apparatus according to the present embodiment
Fig. 4 is an exemplary fastening unit used for unitarily fastening a discharge gate and a rotary shaft of Fig. 1 to each other.
Fig. 5 is a view showing an exemplary coupling structure used for coupling a bearing unit supporting the rotary shaft of Fig. 1 to a mounting member of the weighing hopper of Fig. 1.
Fig. 6 is a view showing an exemplary support means used for supporting a hopper body by a load cell of Fig. 1.
Fig. 7 is a view showing an exemplary support means used for supporting the hopper body by the load cell of Fig. 1.
Fig. 8 is a view showing an exemplary support means used for supporting the hopper body by the load cell of Fig. 1.

### Description of Embodiments

Hereinafter, a preferred embodiment of the present invention will be described with reference to the drawings. Throughout the drawings, the same or corresponding components are identified by the same reference symbols and will not be described in repetition in some cases. The present invention is not limited to the embodiment described below.

### (Embodiment)

### [Overall configuration of apparatus]

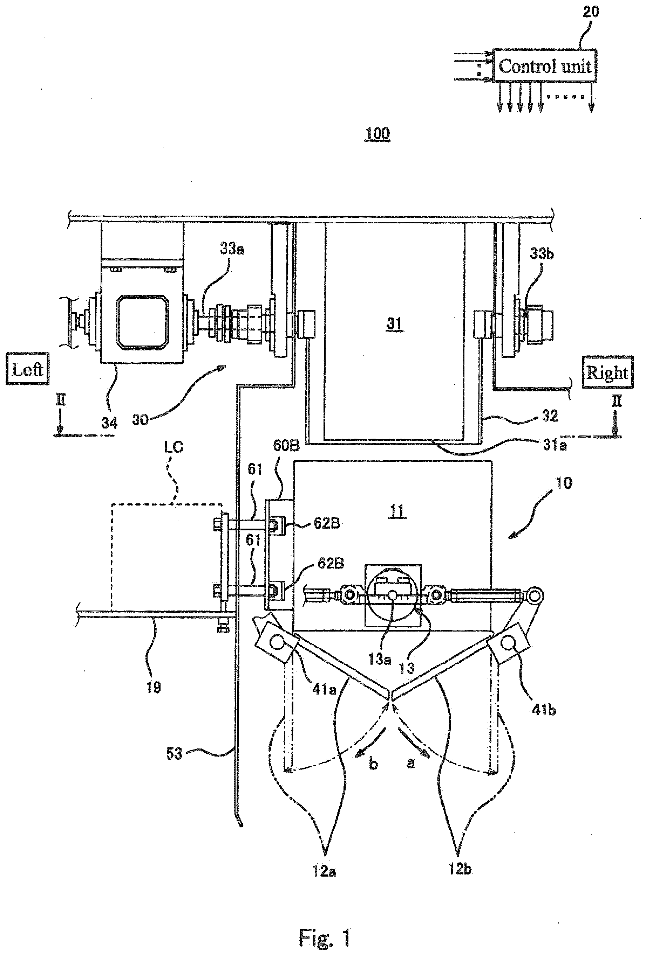

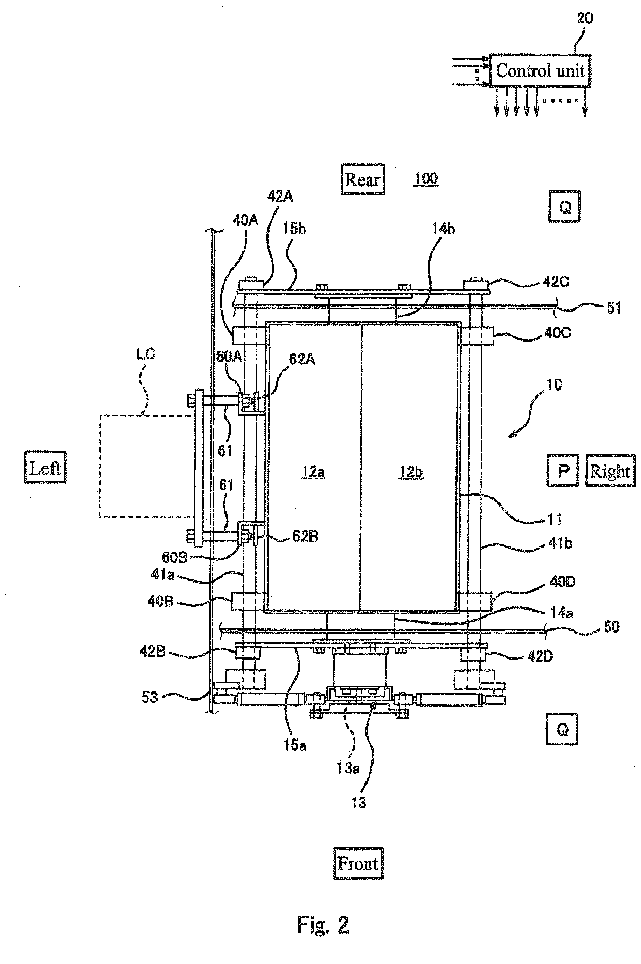

Fig. 1 is a front view of an exemplary weighing apparatus according to the embodiment of the present invention. Fig. 2 is a plan view of the weighing apparatus (taken in the direction of arrows along II-II of Fig. 1).

Hereinafter, for easier explanation, "front", "rear", "left", and "right" are defined as shown in Figs. 1 and 2.

A weighing apparatus 100 includes a weighing hopper 10, a load cell LC supporting the weighing hopper 10 (hopper body 11), a supply device 30, and a control unit 20. The load cell LC is placed on a load cell placement table 19. A single load cell LC or a plurality of load cells LC may be provided. A support means used for supporting the hopper body 11 by the load cell LC will be described in detail later.

As shown in Fig. 1, the supply device 30 is placed immediately above the weighing hopper 10 to supply objects to the weighing hopper 10. Although in the present embodiment, the supply device 30 is included in the weighing apparatus 100 as described above, the present invention is not limited to this configuration. As examples of the objects, there are powdered products (detergent, fertilizer, etc.), granular products (resin pellets, cereal, feeding stuff, etc.), or the like.

The supply device 30 includes a cylindrical throw-in chute 31 extending vertically (upward or downward direction), a cut gate 32 for opening and closing an opening 31a at the lower end of the throw-in chute 31, and anAC servo motor 34. The throw-in chute 31 is filled with the objects supplied from above. The cut gate 32 is fastened to motor shafts 33a, 33b of the AC servo motor 34. In this configuration, in the supply device 30, the motor shafts 33a, 33b are actuated to be rotated by the AC servo motor 34, respectively, thereby performing opening and closing operations of the opening 31a. Specifically, when the cut gate 32 rotates in a direction perpendicular to the drawing sheet of Fig. 1, the opening 31a of the throw-in chute 31 is opened. In this open state, the objects are sequentially dropped from inside of the throw-in chute 31 through the opening 31a, and supplied to the weighing hopper 10.

On the other hand, when the cut gate 32 rotates in an opposite direction in the above state, the opening 31a of the throw-in chute 31 is closed. At this time, the opening 31a is closed to cut-off a flow of the objects dropped by their own weight from inside of the throw-in chute 31.

Below the weighing hopper 10, for example, a funnel (not shown) is placed to receive the objects discharged from the weighing hopper 10 and supply the objects to a packaging machine (not shown).

As shown in Figs. 1 and 2, the weighing hopper 10 includes a hopper body 11 of a rectangular shape and a tubular shape, a pair of discharge gates 12a, 12b which are used as the bottom lid of the hopper body 11 and are capable of opening and closing a discharge outlet through which the objects are discharged from the hopper body 11, and a rotary actuator 13 for generating a driving force for opening and closing the discharge gates 12a, 12b. The rotary actuator 13 is placed on the side surface of the hopper body 11 which is parallel to a plane including the opening and closing directions of discharge gates 12a, 12b.

As shown in Fig. 2, the weighing hopper 10 includes a pair of left and right rotary shafts 41a, 41b. The left rotary shaft 41a is unitarily fastened to the discharge gate 12a using fastening units 40A, 40B and connected to the rotary actuator 13. The right rotary shaft 41b is unitarily fastened to the discharge gate 12b using fastening units 40C, 40D and connected to the rotary actuator 13. The fastening units 40A, 40B, 40C, 40D will be described in detail later.

The weighing hopper 10 includes bearing units 42A, 42B, 42C, 42D. The bearing units 42A, 42B are constituted by bearings, respectively, and are provided at one end side and the other end side of the rotary shaft 41a, respectively, to support the rotary shaft 41a such that the rotary shaft 41a is rotatable. In other words, the bearing units 42A, 42B are coupled to predetermined locations of a rear mounting member 15b and a front mounting member 15a, respectively. This allows the both end portions of the rotary shaft 41a to be rotatable by the bearing units 42A, 42B, respectively. The bearing units 42C, 42D are constituted by bearings, respectively, and are provided at one end side and the other end side of the rotary shaft 41b, respectively, to support the rotary shaft 41b such that the rotary shaft 41b is rotatable. In other words, the bearing units 42C, 42D are coupled to predetermined locations of the rear mounting member 15b and the front mounting member 15a, respectively. This allows the both end portions of the rotary shaft 41b to be rotatable by the bearing units 42C, 42D, respectively. A coupling structure provided between the mounting member 15a and the bearing units 42B, 42D, and a coupling structure provided between the mounting member 15b and the bearing units 42A, 42C, will be described in detail later.

The rotary shafts 41a, 41b are coupled to the rotary actuator 13 via link units using toggle mechanisms, respectively. The structure of link units is known, and therefore will not be described in detail.

In the above configuration, when a rotary shaft 13a of the rotary actuator 13 rotates, for example, counterclockwise to a specified angle, the rotary shafts 41a, 41b rotate via the link units, respectively. This causes the driving force of the rotary actuator 13 to be transmitted to the discharge gates 12a, 12b via the rotary shafts 41a, 41b and the fastening units 40A, 40B, 40C, 40D. Thereby, the discharge gates 12a, 12b rotate in the directions of arrows b, a, respectively (see Fig. 1) and are opened (i.e., the discharge outlet of the hopper body 11 is opened). When the discharge gates 12a, 12b are closed (i.e., the discharge outlet of the hopper body 11 is closed), the reversed operation is performed. The operation of the rotary actuator 13 is controlled by the control unit 20. As shown in Fig. 2, in the weighing apparatus 100 of the present embodiment, a pair of front and rear partition walls 50, 51 and a pair of front and rear coupling pipes 14a, 14b are provided. The partition walls 50, 51 partition a region in which the weighing hopper 10 is placed into a center region P including a region through which the objects are dropped and outer regions Q located forward and rearward relative to the center region P, when the weighing apparatus 100 is viewed from above. The coupling pipes 14a, 14b penetrate the partition walls 50, 51, respectively, and are fastened to the front and rear side walls of the hopper body 11, respectively by suitable fastening means. The above described mounting members 15a, 15b are fastened to the coupling pipes 14a, 14b, respectively, by suitable fastening means.

As shown in Fig. 2, in the weighing apparatus 100 of the present embodiment, in the center region P, the hopper body 11, the discharge gates 12a, 12b, the fastening units 40A, 40B for unitarily fastening the discharge gate 12a and the rotary shaft 41a to each other, and the fastening units 40C, 40D for unitarily fastening the discharge gate 12b and the rotary shaft 41b to each other, are placed.

In contrast, in the outer regions Q, the rotary actuator 13, and the bearing units 42A, 42B, 42C, 42D are placed. Each of the rotary shafts 41a, 41b penetrates the partition walls 50, 51 in a non-contact state.

In accordance with this configuration, in the weighing apparatus 100 of the present embodiment, the discharge gates 12a, 12b are unitarily fastened to the rotary shafts 41a, 41b, respectively. This makes it possible to prevent ingress of the constituents of the fastening units 40A, 40B, 40C, 40D into the objects. In addition, it becomes possible to prevent a situation in which the foreign matters from the rotary actuator 13 and the bearing units 42A, 42B, 42C, 42D are dropped into the hopper body 11 of the weighing hopper 10 by mistake and ingress of the foreign matters into the objects occurs.

### [Configuration of control system]

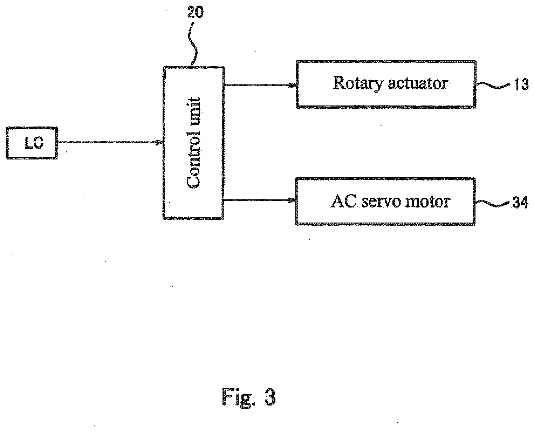

Fig. 3 is a block diagram showing an exemplary control system in the weighing apparatus according to the present embodiment

The control unit 20 is constituted by, for example, a microcontroller, etc., and includes a CPU and a memory such as RAM and ROM. In the present embodiment, the control unit 20 controls the overall weighing apparatus 100 including the supply device 30 in such a manner that the CPU executes programs stored in the memory. The control unit 20 also serves as a weight calculation means. It should be noted that the control unit 20 may be a single controller configured to perform centralized control or a plurality of controllers configured to cooperate with each other to perform distributed control.

The control unit 20 receives as an input the signal output from the load cell LC supporting the weighing hopper 10 via a known signal processing circuit (amplifier, A/D converter, etc.; not shown). Based on the output signal, the control unit 20 calculates the weight of the objects held in the weighing hopper 10. Off course, the value indicated by each signal output from the load cell LC is proportional to and corresponds to the weight of the objects held in the weighing hopper 10.

The control unit 20 controls, for example, the AC servo motor 34 via a known drive circuit (not shown) to control the opening and closing operations of the opening 31a of the throw-in chute 31. In addition, the control unit 20 controls the rotary actuator 13 via a known drive circuit (not shown) to control the opening and closing operations of the discharge gates 12a, 12b.

For example, the control unit 20 opens the opening 31a of the throw-in chute 31 for a preset first predetermined time to discharge the objects from the supply device 30, and thereafter calculates the weight of the objects inside the weighing hopper 10 based on the signal output from the load cell LC. After that, at a specified timing (e.g., time when a discharge permission signal is received from the packaging machine), the control unit 20 opens the discharge gates 12a, 12b for a preset second predetermined time to discharge the objects from the weighing hopper 10. The discharged objects are supplied to, for example, the packaging machine through the funnel. The above described operation is performed in repetition under control of the control unit 20.

### [Configuration of fastening unit]

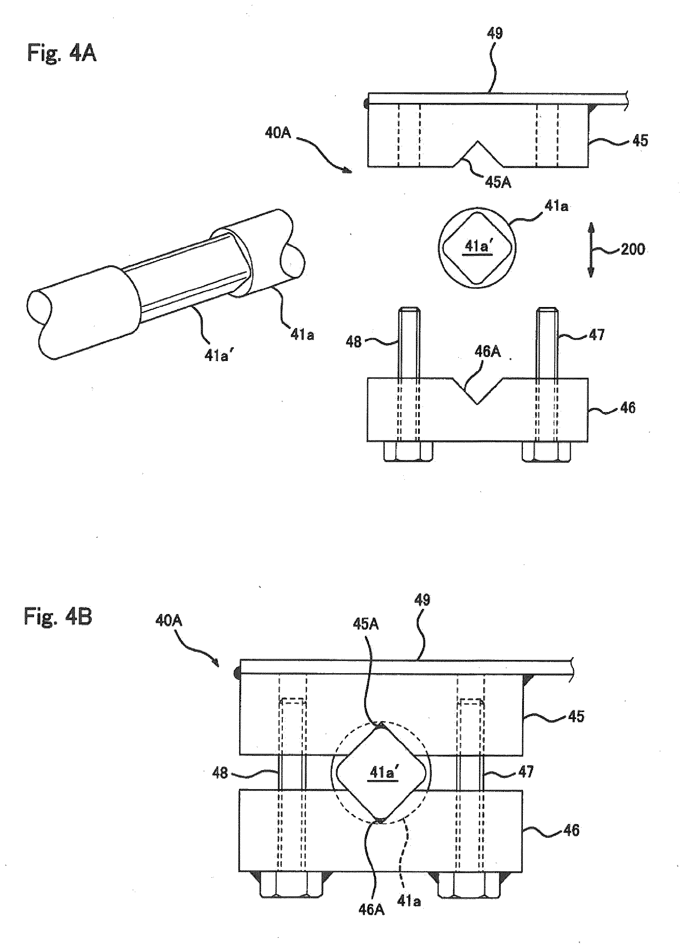

Figs. 4A and 4B are each showing an exemplary fastening unit used for unitarily fastening the discharge gate and the rotary shaft of Fig. 1 to each other.

Hereinafter, the configuration of the fastening unit 40A, among the four fastening units 40A, 40B, 40C, 40D, will be described as a representative. The other fastening units 40B, 40C, 40D are configured in the same manner.

As shown in Fig. 4, the fastening unit 40A includes a pair of fastening metal members 45, 46, a pair of fastening bolts 47, 48, and a coupling plate 49.

The fastening metal members 45,46 sandwich the rotary shaft 41a in a direction 200 perpendicular to the axial direction of the rotary shaft 41a, and thereby move according to the rotation of the rotary shaft 41a.

Specifically, as shown in Fig. 4A, a portion of the cylindrical rotary shaft 41a is processed to have an axial cross-section with a substantially rectangular shape. The fastening metal members 45,46 hold a rectangular section 41a' in the direction 200 perpendicular to the axial direction such that the surfaces of V-grooves 45A, 46A of the fastening metal members 45, 46 are in contact with the surfaces of the rectangular section 41a' as shown in Fig. 4B. This allows the fastening metal members 45, 46 to move according to the rotation of the rotary shaft 41a.

In this state, the fastening bolts 47,48 fasten the fastening metal members 45, 46 to each other in the direction 200 perpendicular to the axial direction. Specifically, the fastening metal member 46 has holes into which the shafts of the fastening bolts 47, 48 are inserted and into which the heads of the fastening bolts 47,48 are not inserted. The fastening metal member 45 has threaded holes with which the shafts of the fastening bolts 47, 48 are threadingly engaged. In this structure, in a state in which the shafts of the fastening bolts 47, 48 are inserted into the through-holes of the fastening metal member 46, respectively, and threadingly engaged with the threaded holes of the fastening metal member 45, the fastening bolts 47, 48 fasten the fastening metal members 45, 46 to each other in the direction 200 perpendicular to the axial direction.

As shown in Fig. 4B, in the present embodiment, after the fastening metal members 45,46 are fastened to each other in the direction 200 perpendicular to the axial direction, using the fastening bolts 47, 48, the heads of the fastening bolts 47, 48 and the fastening metal member 46 are joined to each other by, for example, welding. As shown in Fig. 4A, the fastening metal member 45 and the coupling plate 49 are joined to each other by, for example, welding (not shown). Furthermore, the coupling plate 49 and the discharge gate 12a are joined to each other by, for example, welding (not shown). In the above described structure, the discharge gate 12a is unitarily fastened to the fastening metal member 45, while the fastening bolts 47, 48 are unitarily fastened to the fastening metal member 46. The fastening metal members 45, 46 are unitarily fastened to each other using the fastening bolts 47, 48. As a result, in the weighing apparatus 100 of the present embodiment, the fastening unit 40A unitarily fastens the discharge gate 12a and the rotary shaft 41a to each other. Because of this, it becomes possible to avoid a situation in which the fastening bolts 47, 48 get loose due to a vibration of the actuated weighing hopper 10. Therefore, it becomes possible to prevent a situation in which the fastening bolts 47, 48 are dropped into the hopper body 11 of the weighing hopper 10 and ingress of the fastening bolts 47, 48 into the objects occurs. In addition, in a maintenance/inspection work of the weighing apparatus 100, it becomes possible to prevent a situation in which the fastening bolts 47, 48 are dropped into the hopper body 11 of the weighing hopper 10 by mistake and ingress of the fastening bolts 47, 48 into the objects occurs.

### [Coupling structure of mounting member and bearing unit]

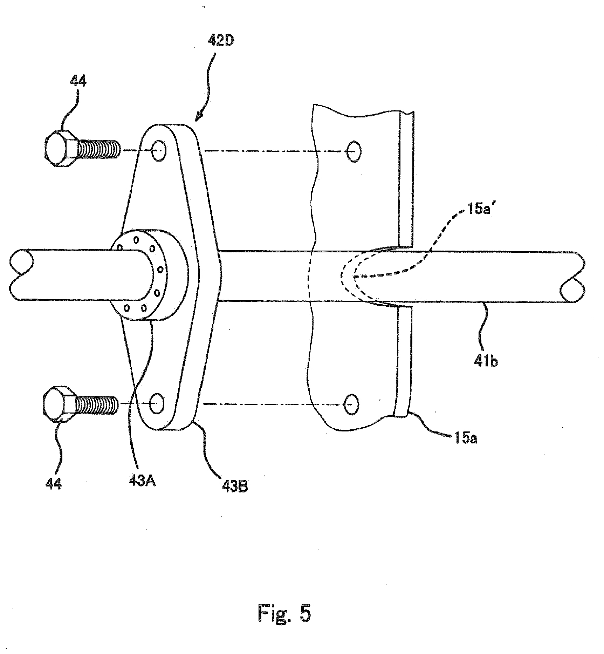

Fig. 5 is a view showing an exemplary coupling structure used for coupling the bearing unit supporting the rotary shaft of Fig. 1 to the mounting member of the weighing hopper of Fig. 1. Hereinafter, the coupling structure between the mounting member 15a and the bearing unit 42D, among the four bearing units 42A, 42B, 42C, 42D, will be described as a representative. The coupling structure for the other bearing units 42A, 42B, 42C, are configured in the same manner.

As shown in Fig. 5, the bearing unit 42D includes a bearing section 43A supporting the rotary shaft 41b such that the rotary shaft 41b is rotatable and a flange section 43B around the bearing section 43A.

In a case where the flange section 43B of the bearing unit 42D is coupled to the mounting member 15a, the rotary shaft 41b penetrates the mounting member 15a in a non-contact state. On the other hand, in a case where the flange section 43B is not coupled to the mounting member 15a, the rotary shaft 41b can be detached from the mounting member 15a in a rightward or leftward direction (see Fig. 2) which is perpendicular to the axial direction of the rotary shaft 41b.

Specifically, the mounting member 15a has a hole 15a' formed by cutting. In a state in which the flange section 43B of the bearing unit 42D is coupled to the mounting member 15a (i.e., screws 44 are inserted into the through-holes of the flange section 43B and threadingly engaged with the mounting member 15a), the rotary shaft 41b can extend through the hole 15a in a non-contact state. In this way, the rotary shaft 41b is rotatably mounted to the bearing unit 42D and the mounting member 15a, and hence to the hopper body 11. On the other hand, in a state in which the flange section 43B of the bearing unit 42D is not coupled to the mounting member 15a (i.e., the screws 44 are disengaged from the mounting member 15a), the rotary shaft 41b can be detached from the mounting member 15a in the rightward or leftward direction (see Fig. 2) via the hole 15a' of the mounting member 15a.

As described above, in the weighing apparatus 100 of the present embodiment, in the maintenance/inspection work of the weighing apparatus 100, the rotary shaft 41b can be easily detached in the rightward or leftward direction. As described above, the discharge gate 12b and the rotary shaft 41b are unitarily fastened to each other. Therefore, in the maintenance/inspection work of the weighing apparatus 100, the discharge gate 12a can also be easily detached in the rightward or leftward direction. It should be noted that in the maintenance/inspection work, it is necessary to remove the partition walls 50, 51 (see Fig. 1) in advance prior to detaching the rotary shaft 41b and the discharge gate 12a. For example, the partition walls 50, 51 may be divided into a plurality of sub-members (not shown) to remove the partition walls 50, 51 in advance. How to divide the partition walls 50, 51 can be easily understood with reference to Patent Literature 1 and will not be described in detail.

### [Support means of hopper body]

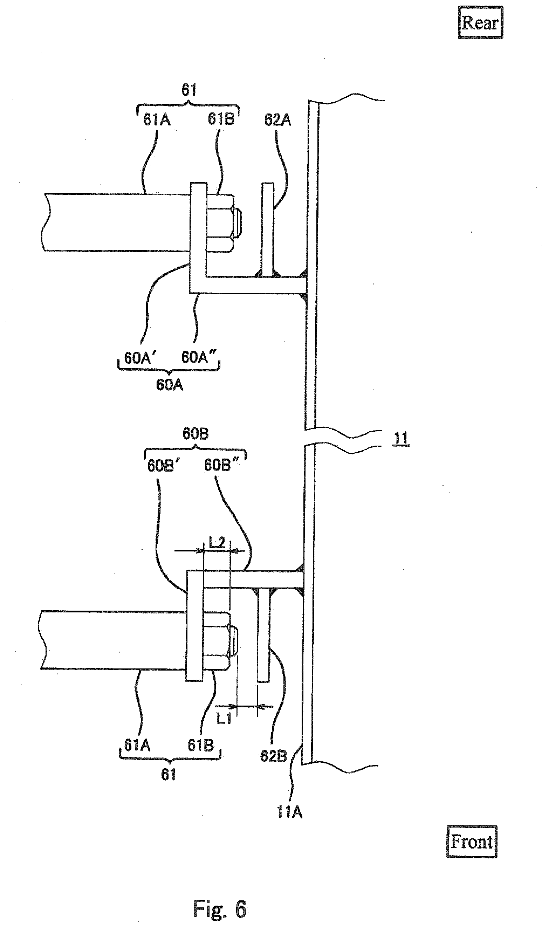

Each of Figs. 6, 7 and 8 is a view showing an exemplary support means used for supporting a hopper body by the load cell of Fig. 1.

As shown in Figs. 1 and 2, the support means includes a pair of rear and front plates 60A, 60B, a plurality of (in the present example, four) coupling members 61, and plate metal members 62A, 62B provided to correspond to the coupling members 61, respectively. In this structure, the coupling members 61 penetrate the partition wall 53 between the load cell LC and the plates 60A, 60B in a non-contact state to cause the load cell LC to be coupled to the plates 60A, 60B.

As shown in Fig. 6, the plate 60A includes a joining section 60A" used for joining the plate 60A to the hopper body 11 and a mounting section 60A' which is perpendicular to the joining section 60A" and is used for mounting the coupling member 61, while the plate 60B includes a joining section 60B" used for joining the plate 60B to the hopper body 11 and a mounting section 60B' which is perpendicular to the joining section 60B" and is used for mounting the coupling member 61. Thus, each of the plate members 60A, 60B constitutes a L-shaped member unitarily fastened to the hopper body 11. That is, the end portions of the joining sections 60A", 60B" of the plates 60A, 60B are joined to the side wall 11A of the hopper body 11 by, for example, welding. In this case, in the present embodiment, as shown in Fig. 6, the plates 60A, 60B are placed to be spaced apart a predetermined distance from each other in the forward or rearward direction such that the mounting sections 60A', 60B' extend in opposite directions from the end portions of the joining sections 60A", 60B", respectively (i.e., the mounting section 60A' extends rearward from the end portion of the joining section 60A" and the mounting section 60B' extends forward from the end portion of the joining section 60B"). This allows the mounting members 61 to be easily attached to the mounting sections 60A', 60B', respectively and the mounting members 61 to be easily detached from the mounting sections 60A', 60B', respectively. The metal member 62A is joined to the joining section 60A" of the plate 60A by, for example, welding such that the metal member 62A extends vertically from the jointing section 60A" in the same direction as the mounting section 60A' extends, while the metal member 62B is joined to the joining section 60B" of the plate 60B by, for example, welding such that the metal member 62B extends vertically from the joining section 60B" in the same direction as the mounting section 60B' extends. In this structure, the metal members 62A, 62B are unitarily fastened to the plates 60A, 60B, respectively such that the metal members 62A, 62B face the mounting sections 60A', 60B', respectively.

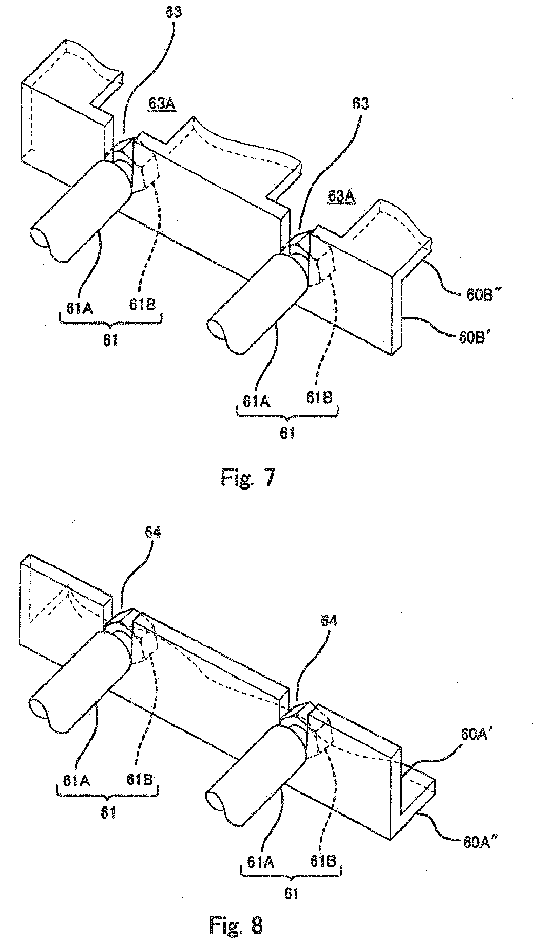

Each of the coupling members 61 includes a bolt 61A and a nut 61B. As shown in Fig. 8, only threaded portions at the tip ends of the bolts 61A are inserted into slits 64, respectively, formed in the mounting section 60A' of the plate 60A, while as shown in Fig. 7, only threaded portions at the tip ends of the bolts 61A are inserted into slits 63, respectively, formed in the mounting section 60B' of the plate 60B. This allows the coupling members 61 to be fastened to the mounting sections 60A', 60B' of the plates 60A, 60B, respectively, by using the fastening forces of the nuts 61B of the coupling members 61.

In this case, as shown in Fig. 6, the metal members 62A, 62B constitute disengagement preventing means of the nuts 61B, respectively. Specifically, a spacing L1 between the tip end of the threaded portion of each of the bolts 61A and the corresponding metal member 62A, 62B is set smaller than a thickness L2 of the nut 618. In this structure, even if the nut 61B and the bolt 61A fastened to each other get loose, the nut 61B does not disengage from the bolt 61A.

Each of the plates 60A, 60B is configured such that the bolts 61A and the nuts 61B of the coupling members 61 are detached in the forward or rearward direction perpendicular to the axial direction of the coupling members 61 by loosening the nuts 61B.

Specifically, as shown in Fig. 7, the joining section 60B" of the plate 60B includes wide openings 63A into which the nuts 61B are inserted, respectively. Thereby, by loosening the nuts 61B of the coupling members 61, the plate 60B can slide along the slits 63 of the mounting section 60B'. This allows the plate 60B to be detached from the coupling members 61 via the slits 63 and the openings 63A. Also, as shown in Fig. 8, by loosening the nuts 61B of the coupling members 61, the plate 60A can slide along the slits 64 of the mounting section 60A'. This allows the plate 60A to be detached from the coupling members 61 via the slits 64.

In the above described configuration, in the weighing apparatus 100 of the present embodiment, even if the nut 61B of the coupling member 61 gets loose due to a vibration of the actuated weighing hopper 10, it becomes possible to prevent a situation in which the nut 61B is dropped into the hopper body 11 of the weighing hopper 10 and ingress of the nut 61B into the objects occurs. Also, in the maintenance/inspection work of the weighing apparatus 100, it becomes possible to prevent a situation in which the nut 61B is dropped into the hopper body 11 of the weighing hopper 10 by mistake and ingress of the nut 61B into the objects occurs.

Moreover, as described above, in the maintenance/inspection work of the weighing apparatus 100, since the plates 60A, 60B can be easily detached from the coupling members 61 in the forward or rearward direction perpendicular to the axial direction of the coupling members 61, the entire weighing hopper 10 (hopper body 11) can be easily detached in the forward or rearward direction. In the maintenance/inspection work, as described above, it is necessary to remove the partition walls 50, 51 in advance prior to detaching the weighing hopper 10. This will not be described in detail.

### Industrial Applicability

The present invention is useful as a weighing apparatus having a contamination-free structure which is capable of preventing the ingress of the foreign matters into the objects appropriately and adequately.

### Reference Signs List

- P: center region
- Q: outer region
- LC: load cell
- 10: weighing hopper
- 11: hopper body
- 12a, 12b: discharge gate
- 13: rotary actuator
- 14a, 14b: coupling pipe
- 15a, 15b: mounting member
- 20: control unit
- 30: supply device
- 31: throw-in chute
- 32: cut gate
- 33a, 33b: motor shaft
- 34: AC servo motor
- 40A, 40B, 40C, 40D: fastening unit
- 41a, 41b: rotary shaft
- 42A, 42B, 42C, 42D: bearing unit
- 44: screw
- 45, 46: fastening metal member
- 47,48: fastening bolt
- 49: coupling plate
- 50,51: partition wall
- 60A, 60B: plate
- 61: coupling member
- 62: metal member
- 63,64: slit

## Claims

1. A weighing apparatus comprising:
a weighing hopper (10) which holds for a specified time objects dropped from above to the weighing hopper and discharges the objects downward; and
a partition wall (50, 51) which partitions a region in which the weighing hopper (10) is placed into a center region (P) including a region through which the objects are dropped and outer regions (Q) located at both sides of the center region (P), when viewed from above;
wherein the weighing hopper (10) includes:
a tubular hopper body (11);
a gate (12a) which is used as a bottom lid of the hopper body and is capable of opening and closing a discharge outlet through which the objects are discharged from the hopper body;
an opening and closing means (13) which is placed on a side surface of the hopper body (11) which is parallel to a plane including opening and closing directions of the gate and generates a force for opening and closing the gate (12a);
a rotary shaft (41a) which is unitarily fastened to the gate (12a) and penetrates the partition wall (50, 51) in a non-contact state to be connected to the opening and closing means; and
first and second bearing units (42A, 42B) which are provided at one end side and the other end side of the rotary shaft (41a), respectively, to support the rotary shaft such that the rotary shaft is rotatable;
wherein the hopper body (11), the gate (12a), and a fastening means (40A, 40B) which unitarily fastens the gate to the rotary shaft, are placed in the center region (P);
wherein the opening and closing means (13), and the first and second bearing units (42A, 42B) are placed in the outer regions (Q),
wherein the fastening means (40A, 40B) includes a pair of fastening metal members (45, 46) which sandwich the rotary shaft (41a) in a direction perpendicular to an axial direction of the rotary shalt, and thereby move according to a rotation of the rotary shaft, and a fastening member (47, 48) which fastens the fastening metal members to each other in the direction perpendicular to the axial direction of the rotary shaft; and
wherein the gate (12a) is unitarily fastened to one of the fastening metal members (45), and the fastening member (47, 48) is unitarily fastened to the other of the fastening metal members (46).

2. The weighing apparatus according to claim 1,
wherein each of the first and second bearing units (42A, 42B) includes a bearing section supporting the rotary shaft (41a) such that the rotary shaft is rotatable and a flange section around the bearing section;
wherein in a state in which the flange section is coupled to a mounting member (15a, 15b) of the hopper body (11), the rotary shaft (41a) penetrates the mounting member in a non-contact state; and
wherein in a state in which the flange section is not coupled to the mounting member (15a, 15b), the rotary shaft (41a) is detachable from the mounting member in a direction perpendicular to an axial direction of the rotary shaft.

3. The weighing apparatus according to claim 2,
wherein the rotary shaft (41a) is detached from the mounting member (15a, 15b) via a hole of the mounting member, the hole being formed by cutting.

## Patentansprüche

1. Wiegevorrichtung, die Folgendes umfasst:
einen Wiegebehälter (10), der für eine vorgegebene Zeit von oben in den Wiegebehälter fallengelassene Gegenstände aufnimmt und die Gegenstände nach unten ausschüttet; und
eine Trennwand (50, 51), die bei Betrachtung von oben einen Bereich, in dem der Wiegebehälter (10) platziert ist, in einen mittleren Bereich (P), der einen Bereich umfasst, durch den die Gegenstände fallengelassen werden, und auf beiden Seien des mittleren Bereichs (P) liegende äußere Bereiche (Q) trennt;
wobei der Wiegebehälter (10) Folgendes umfasst:
einen röhrenförmigen Behälterkörper (11);
einen Verschluss (12a), der als unterer Deckel des Behälterkörpers verwendet wird und in der Lage ist, einen Ausschüttauslass, durch den die Gegenstände aus dem Behälterkörper ausgeschüttet werden, zu öffnen und zu schließen;
ein Öffnungs- und Schließmittel (13), das an einer Seitenfläche des Behälterkörpers (11) platziert ist, die zu einer eine Öffnungs- und eine Schließrichtung des Verschlusses enthaltenden Ebene parallel ist, und eine Kraft zum Öffnen und Schließen des Verschlusses (12a) erzeugt;
eine Drehwelle (41a), die unitär an dem Verschluss (12a) befestigt ist und die Trennwand (50, 51) in einem berührungslosen Zustand durchdringt, um mit dem Öffnungs- und Schließmittel verbunden zu sein; und
eine erste und eine zweite Lagereinheit (42A, 42B), die an einer Endseite bzw. der anderen Endseite der Drehwelle (41a) vorgesehen sind, um die Drehwelle derart zu halten, dass die Drehwelle drehbar ist;
wobei der Behälterkörper (11), der Verschluss (12a) und ein Befestigungsmittel (40A, 40B), das den Verschluss unitär an der Drehwelle befestigt, in dem mittleren Bereich (P) platziert sind;
wobei das Öffnungs- und Schließmittel (13) und die erste und die zweite Lagereinheit (42A, 42B) in den äußeren Bereichen (Q) platziert sind,
wobei das Befestigungsmittel (40A, 40B) Folgendes umfasst: ein Paar Metallbefestigungselemente (45, 46), die die Drehwelle (41a) in einer zu einer Axialrichtung der Drehwelle senkrechten Richtung sandwichartig umschließen und sich dadurch gemäß einer Drehung der Drehwelle bewegen, und ein Befestigungselement (47, 48), das die Metallbefestigungselemente in der zu der Axialrichtung der Drehwelle senkrechten Richtung aneinander befestigt; und
wobei der Verschluss (12a) unitär an einem der Metallbefestigungselemente (45) befestigt ist und das Befestigungselement (47, 48) unitär an dem anderen der Metallbefestigungselemente (46) befestigt ist.

2. Wiegevorrichtung nach Anspruch 1,
wobei die erste und die zweite Lagereinheit (42A, 42B) jeweils einen Lagerabschnitt, der die Drehwelle (41a) derart hält, dass die Drehwelle drehbar ist, und einen Flanschabschnitt um den Lagerabschnitt umfassen;
wobei in einem Zustand, in dem der Flanschabschnitt an ein Anbauelement (15a, 15b) des Behälterkörpers (11) gekoppelt ist, die Drehwelle (41a) das Anbauelement in einem berührungslosen Zustand durchdringt; und
wobei in einem Zustand, in dem der Flanschabschnitt nicht an das Anbauelement (15a, 15b) gekoppelt ist, die Drehwelle (41a) in einer zu einer Axialrichtung der Drehwelle senkrechten Richtung von dem Anbauelement abnehmbar ist.

3. Wiegevorrichtung nach Anspruch 2,
wobei die Drehwelle (41a) über ein Loch des Anbauelements von dem Anbauelement (15a, 15b) abgenommen wird, wobei das Loch durch Spanen gebildet wird.

## Revendications

1. Appareil de pesage comportant :
une trémie de pesage (10) qui retient pendant une durée spécifiée des objets lâchés par au-dessus jusque dans la trémie de pesage et qui décharge les objets vers le bas ; et
une paroi de séparation (50, 51) qui sépare une région dans laquelle la trémie de pesage (10) est placée dans une région centrale (P) comprenant une région au travers de laquelle les objets sont lâchés et des régions extérieures (Q) situées des deux côtés de la région centrale (P), quand vu de dessus ;
dans lequel la trémie de pesage (10) comprend :
un corps de trémie tubulaire (11) ;
une porte (12a) qui est utilisée pour servir de couvercle de fond du corps de trémie et qui est en mesure d'ouvrir et de fermer une sortie de décharge au travers de laquelle les objets sont déchargés en provenance du corps de trémie ;
un moyen d'ouverture et de fermeture (13) qui est placé sur une surface latérale du corps de trémie (11) qui est parallèle par rapport à un plan comprenant des directions d'ouverture et de fermeture de la porte et qui génère une force servant à des fins d'ouverture et de fermeture de la porte (12a) ;
un arbre rotatif (41a) qui est fixé d'un seul tenant à la porte (12a) et qui pénètre dans la paroi de séparation (50, 51) dans un état de non-contact à des fins de raccordement au moyen d'ouverture et de fermeture ; et
des première et deuxième unités formant palier (42A, 42B) qui sont mises en oeuvre au niveau d'un côté d'extrémité et de l'autre côté d'extrémité de l'arbre rotatif (41a), respectivement, à des fins de support de l'arbre rotatif de telle sorte que l'arbre rotatif est en mesure de tourner ;
dans lequel le corps de trémie (11), la porte (12a), et un moyen de fixation (40A, 40B) qui fixe d'un seul tenant la porte à l'arbre rotatif, sont placés dans la région centrale (P) ;
dans lequel le moyen d'ouverture et de fermeture (13), et les première et deuxième unités formant palier (42A, 42B) sont placés dans les régions extérieures (Q),
dans lequel le moyen de fixation (40A, 40B) comprend une paire d'éléments métalliques de fixation (45, 46) qui prennent l'arbre rotatif (41a) en sandwich dans une direction perpendiculaire par rapport à une direction axiale de l'arbre rotatif, et qui de ce fait se déplacent en fonction d'une rotation de l'arbre rotatif, et un élément de fixation (47, 48) qui fixe les éléments métalliques de fixation l'un à l'autre dans la direction perpendiculaire par rapport à la direction axiale de l'arbre rotatif ; et
dans lequel la porte (12a) est fixée d'un seul tenant à l'un des éléments métalliques de fixation (45), et l'élément de fixation (47, 48) est fixé d'un seul tenant à l'autre des éléments métalliques de fixation (46).

2. Appareil de pesage selon la revendication 1,
dans lequel chacune des première et deuxième unités formant palier (42A, 42B) comprend une section formant palier supportant l'arbre rotatif (41a) de telle sorte que l'arbre rotatif est en mesure de tourner et une section formant bride autour de la section formant palier ;
dans lequel, dans un état dans lequel la section formant bride est accouplée à un élément de montage (15a, 15b) du corps de trémie (11), l'arbre rotatif (41a) pénètre dans l'élément de montage dans un état de non-contact ; et
dans lequel, dans un état dans lequel la section formant bride n'est pas accouplée à l'élément de montage (15a, 15b), l'arbre rotatif (41a) est en mesure d'être détaché de l'élément de montage dans une direction perpendiculaire par rapport à une direction axiale de l'arbre rotatif.

3. Appareil de pesage selon la revendication 2,
dans lequel l'arbre rotatif (41a) est détaché de l'élément de montage (15a, 15b) par le biais d'un trou de l'élément de montage, le trou étant formé par découpe.
